# EUROPEAN PATENT SPECIFICATION

(11) **EP 2 642 623 B1**
(45) Date of publication and mention of the grant of the patent: **06.01.2016**
(21) Application number: 10859766.7
(22) Date of filing: 15.11.2010
(51) Int. Cl.: H02B 5/06, H02B 1/22, H02B 13/035

(54) **GAS-INSULATED SWITCHGEAR**
GASISOLIERTE SCHALTANLAGE
APPAREILLAGE DE CONNEXION À ISOLATION GAZEUSE

(43) Date of publication of application: 25.09.2013
(73) Proprietor: Mitsubishi Electric Corporation, Tokyo 100-8310 (JP)
(72) Inventor: OSUMI, Masanori, Tokyo 100-8310 (JP); HYODO, Yuki, Tokyo 100-8310 (JP)
(74) Representative: Meissner, Bolte & Partner GbR
(86) International application number: PCT/JP2010/070309
(87) International publication number: WO 2012/066616

(56) References cited:
- WO-A1-2008/139592
- JP-A- 2 193 508

## Description

### Field

The present invention relates to a gas-insulated switchgear.

### Background

FIG. 25 of Patent Literature 1 describes a gas-insulated switchgear of a double bus bar system including a vertical circuit breaker tank, a first bus bar that is connected to an upper branch outlet of this vertical circuit breaker tank, and a second bus bar that is connected to a lower branch outlet of this vertical circuit breaker tank.

FIGS. 4 to 6 of Patent Literature 2 depict a configuration example of a gas-insulated switchgear of a double bus bar system in which a pair of disconnecting switches for partitioning bus bars and a circuit breaker connected between the paired disconnecting switches are provided halfway along one of the bus bars that constitute double bus bars. Specifically, ends of the bus bars are arranged face to face in a partitioning portion of the bus bar arranged on the same axis, a first disconnecting switch extending upward is connected to one of the ends, a second disconnecting switch extending upward and longer than the first disconnecting switch is connected to the other end, and the vertical circuit breaker is arranged to face the first disconnecting switch in a direction orthogonal to an axial direction. A branch outlet of the first disconnecting switch is connected to a lower branch outlet of the circuit breaker, and a branch outlet of the second disconnecting switch is connected to an upper branch outlet of the circuit breaker by using a connection bus bar or the like extending in an axial direction. JPH02193508 A discloses another gas-insulated switchgear with a double bus bar system having the features of the preamble of claim 1.

### Citation List

### Patent Literatures

Patent Literature 1: International Publication No. WO2007/116479
Patent Literature 2: Japanese Patent Application Laid-open No. H1-214204

### Summary

### Technical Problem

As described above, the gas-insulated switchgear of Patent Literature 2 is configured to be able to open or close the bus bars using the paired disconnecting switches and the circuit breaker. In this connection structure (hereinafter, "bus-bar connection unit"), one of the double bus bars needs a space for arranging two disconnecting switches, and both the bus bars constituting the double bus bars need a space twice as large as the space, that is, a space for arranging four disconnecting switches. That is, in the example of Patent Literature 2, dimensions of the bus-bar connection unit increase in an axial direction of the bus bars in proportion to the number of bus bars, and this disadvantageously results in an increase in an installation area of the gas-insulated switchgear.

The present invention has been achieved in view of the above problem, and an object of the present invention is to provide a gas-insulated switchgear of a double bus bar system capable of realizing a reduced installation area.

### Solution to Problem

In order to solve the above problem and in order to attain the above object, a gas-insulated switchgear of a double bus bar system regarding the present invention includes a first bus bar, a second bus bar that is arranged below the first bus bar and is parallel to the first bus bar, a first bus-bar connection unit that is connected between face-to-face bus bar ends of the first bus bar and partitions the first bus bar, and a second bus-bar connection unit that is connected between face-to-face bus bar ends of the second bus bar and partitions the second bus bar. Additionally, the first bus-bar connection unit includes a first connection tank of a vertical shape that includes a branch outlet led out in a horizontal direction orthogonal to the first bus bar, where one of the bus bar ends of the first bus bar is connected to the branch outlet, a first circuit breaker of a vertical shape that is arranged in an upper portion of the first connection tank, and that includes a branch outlet on a side opposite to the branch outlet of the first connection tank, a first inclined connection tank that has a side surface of an upper end connected to the branch outlet of the first circuit breaker, that has a lower end arranged on a side of the other bus bar end of the first bus bar, and that is inclined with respect to the first connection tank, and a first connection bus bar that has one end connected to the lower end of the first inclined connection tank, that extends in a horizontal direction orthogonal to the first bus bar, and that has the other end connected to the other bus bar end of the first bus bar. More additionally, the second bus-bar connection unit includes a second connection tank of a vertical shape that is arranged to face the first connection tank across the first connection bus bar in an extending direction of the second bus bar, and that includes a branch outlet led out in a horizontal direction orthogonal to the second bus bar, where one of the bus bar ends of the second bus bar is connected to the branch outlet, a second circuit breaker of a vertical shape that is arranged in an upper portion of the second connection tank, and that includes a branch outlet on a side opposite to the branch outlet of the second connection tank, a second inclined connection tank that is longer than the first inclined connection tank, that has a side surface of an upper end connected to the branch outlet of the second circuit breaker, that has a lower end arranged below the lower end of the first inclined connection tank, and that is inclined in an opposite direction to an inclining direction of the first inclined connection tank, and a second connection bus bar that has one end connected to the lower end of the second inclined connection tank, that extends in parallel to the first connection bus bar, and that has the other end connected to the other bus bar end of the second bus bar.

### Advantageous Effects of Invention

According to the present invention, in the gas-insulated switchgear of a double bus bar system, it is possible to reduce dimensions between first and second bus-bar connection units and to reduce the installation area of the gas-insulated switchgear.

### Brief Description of Drawings

FIG. 1 is a top view of an example of an arrangement configuration of a gas-insulated switchgear according to a first embodiment.
FIG. 2 is a single-line diagram of the gas-insulated switchgear according to the first embodiment.
FIG. 3 is a side view of a configuration of a bus-bar connection unit (I) in the gas-insulated switchgear according to the first embodiment, which is a diagram viewed from a direction P in FIG. 1.
FIG. 4 is a single-line diagram of the bus-bar connection unit (I).
FIG. 5 is a cross-sectional view taken along an arrow A-A in FIG. 1 or FIG. 3.
FIG. 6 is a cross-sectional view taken along an arrow B-B in FIG. 1 or FIG. 3.
FIG. 7 is a cross-sectional view taken along an arrow C-C in FIG. 1 or FIG. 3.
FIG. 8 is a side view of a configuration of a bus-bar communication unit (II) in a gas-insulated switchgear according to a second embodiment.
FIG. 9 is a single-line diagram of the bus-bar communication unit (II).
FIG. 10 is a side view of a configuration of a line unit (III) in a gas-insulated switchgear according to a third embodiment.
FIG. 11 is a single-line diagram of the line unit (III).

### Description of Embodiments

Exemplary embodiments of a gas-insulated switchgear according to the present invention will be explained below in detail with reference to the accompanying drawings. The present invention is not limited to the embodiments.

### First embodiment.

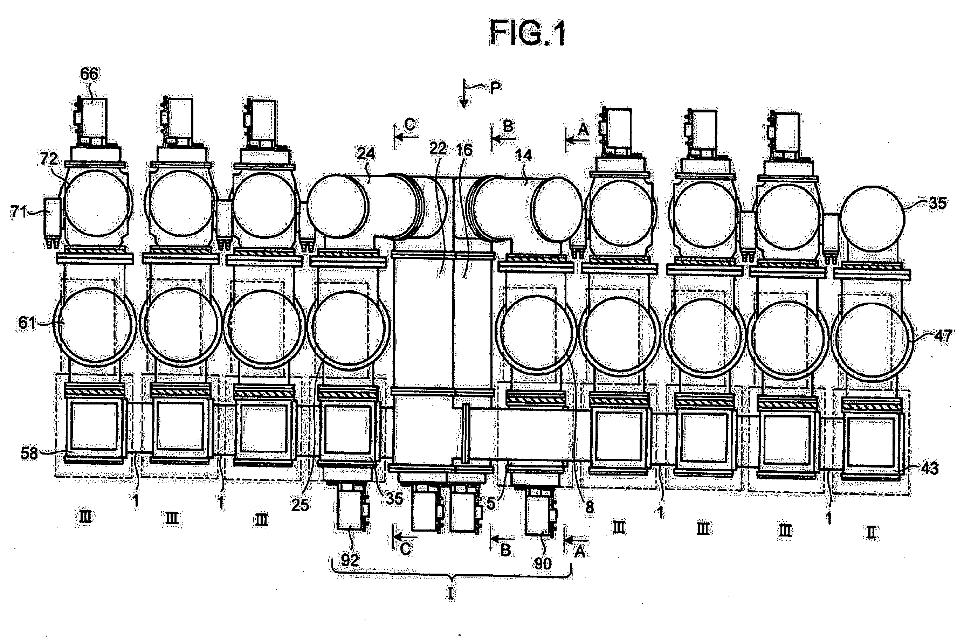

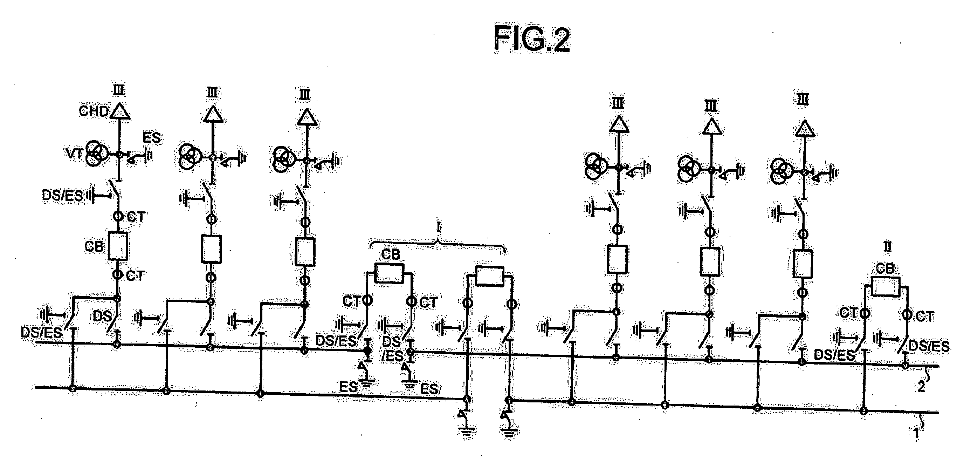

FIG. 1 is a top view of an example of an arrangement configuration of a gas-insulated switchgear according to a first embodiment of the present invention, and FIG. 2 is a single-line diagram of the gas-insulated switchgear according to the present embodiment. As shown in FIGS. 1 and 2, the gas-insulated switchgear according to the present embodiment is a gas-insulated switchgear of a double bus bar system configured to include bus bars 1 and 2. The gas-insulated switchgear includes a bus-bar connection unit (I) that is provided halfway along the bus bars 1 and 2, a bus-bar communication unit (II) that communicates the bus bars 1 and 2 with each other, and line units (III) for power transmission/reception including line devices such as cable heads. The gas-insulated switchgear is configured to connect these units to one another by the bus bars 1 and 2. FIG. 2 is a single-line diagram corresponding to the arrangement configuration of FIG. 1. In FIG. 2, reference sign CHD denotes a cable head, VT denotes an instrument voltage transformer, ES denotes an earth switch, DS/ES denotes a disconnecting switch with an earth switch, DS denotes a disconnecting switch, CT denotes an instrument current transformer, and CB denotes a circuit breaker. In FIGS. 1 and 2, the number of the installed line units (III) can be appropriately changed depending on a specific configuration. In the present embodiment, a configuration of the bus-bar connection unit (I) is explained.

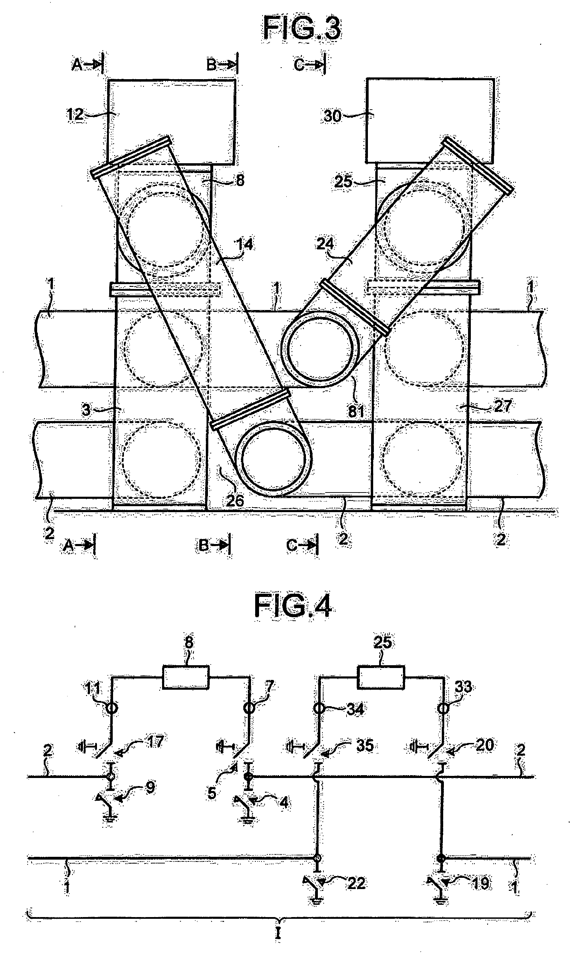

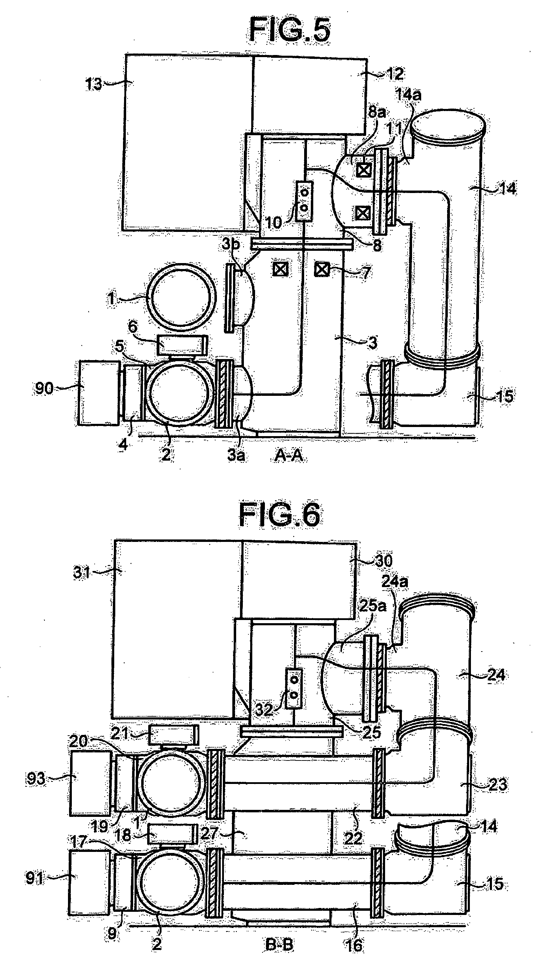

FIG. 3 is a. side view of a configuration of the bus-bar connection unit (I) in the gas-insulated switchgear according to the present embodiment, which is a diagram viewed from a direction P in FIG. 1. FIG. 4 is a single-line diagram of the bus-bar connection unit (I),FIG. 5 is a cross-sectional view taken along an arrow A-A in FIG. 1 or FIG. 3, FIG. 6 is a cross-sectional view taken along an arrow B-B in FIG. 1 or FIG. 3, and FIG. 7 is a cross-sectional view taken along an arrow C-C in FIG. 1 or FIG. 3.

The bus-bar connection unit (I) is configured to include a bus-bar connection unit (first bus-bar connection unit) for the bus bar 1 and a bus-bar connection unit (second bus-bar connection unit) for the bus bar 2. First, as shown in FIG. 4, the bus-bar connection unit for the bus bar 1 that includes an earth switch 22 (ES), a disconnecting switch 35 (DS/ES) with an earth switch, an instrument current transformer 34 (CT), a circuit breaker 25 (CB), an instrument current transformer 33 (CT), a disconnecting switch 20 (DS/ES) with an earth switch, and an earth switch 19 (ES) is provided halfway along the bus bar 1 (first bus bar). The bus-bar connection unit for the bus bar 2 that includes an earth switch 9 (ES), a disconnecting switch 17 (DS/ES) with an earth switch, an instrument current transformer 11 (CT), a circuit breaker 8 (CB), an, instrument current transformer 7 (CT), a disconnecting switch 5 (DS/ES) with an earth switch, and an earth switch 4 (ES) is provided halfway along the bus bar 2 (second bus bar).

The arrangement configuration of the bus-bar connection unit (I) is explained next with reference to FIGS. 1, 3, and 5 to 7. An arrangement configuration of the bus-bar connection unit for the bus bar 2 (second bus-bar connection unit) is explained first. In the bus-bar connection unit for the bus bar 2, a cylindrical connection tank 3 (second connection tank) having, for example, two branch outlets provided on a side surface is installed with an axis thereof set perpendicular to an installation surface. That is, the connection tank 3 is a so-called vertical type. Furthermore, a lower branch outlet 3a and an upper branch outlet 3b, for example, are led out from the side surface of the connection tank 3 substantially horizontally in the same direction. Further, the branch outlet 3a is provided at the same height as that of, for example, the bus bar 2, and the branch outlet 3b is provided at the same height as that of, for example, the bus bar 1.

The disconnecting switch 5 (third disconnecting switch) with an earth switch is connected to the branch outlet 3a. An operating device 6 for the disconnecting switch 5 is provided in an upper portion of the disconnecting switch 5, and the earth switch 4 is provided on a side surface of the disconnecting switch 5. An operating device 90 for the earth switch 4 is provided on the earth switch 4. The earth switch is not necessarily added to the disconnecting switch 5.

The bus bar 2 extends in a direction substantially orthogonal to axes of the branch outlets 3a and 3b and the axis of the connection tank 3. Furthermore, bus bar ends of the bus bar 2 are arranged face to face in an installation portion of the bus-bar connection unit for the bus bar 2. Therefore, as shown in FIG. 3, a gap 26 is provided between the bus bar ends of the bus bar 2. The bus bar 2 extends substantially horizontally. The disconnecting switch 5 is connected to one of the face-to-face bus bar ends of the bus bar 2. The bus bar 1 is provided above the bus bar 2 to extend substantially in parallel to the bus bar 2.

A conductor that is connected to the disconnecting switch 5 is arranged within the connection tank 3, and this connector that serves as an energization unit is introduced to the circuit breaker 8 (second circuit breaker) arranged in an upper portion of the connection tank 3. Furthermore, the annular instrument current transformer 7 is arranged in an inner upper portion of the connection tank 3. The instrument current transformer 7 surrounds the conductor provided within the connection tank 3 and measures a current carried across the conductor. No device is connected to the upper branch outlet 3b and the upper branch outlet 3b is covered with a lid.

The vertical circuit breaker 8 is arranged in the upper portion of the connection tank 3. That is, the circuit breaker 8 is configured to accommodate a circuit breaking unit 10 within a cylindrical circuit breaker tank. The circuit breaker tank is arranged on the same axis as that of the connection tank 3, and the circuit breaker tank and the connection tank 3 are coupled to each other by, for example, fastening flanges of the circuit breaker tank and the connection tank 3, respectively. The circuit breaker tank of the circuit breaker 8 is shorter than the connection tank 3, for example. For example, one branch outlet 8a is provided on a side surface of the circuit breaker tank of the circuit breaker 8. The branch outlet 8a is led out substantially horizontally in a direction substantially orthogonal to the axis of the circuit breaker tank. For example, the lead-out direction of the branch outlet 8a is opposite to that of the branch outlets 3a and 3b. The circuit breaker tank of the circuit breaker 8 can be formed integrally with the connection tank 3. That is, the circuit breaker tank including the connection tank 3 can be used for the circuit breaker 8. In this case, the circuit breaker 8 includes the three branch outlets 3a, 3b, and 8a.

The conductor within the connection tank 3 is connected to one end of the circuit breaking unit 10. The conductor that is connected to the other end of the circuit breaking unit 10 is introduced into an inclined connection tank 14 via the branch outlet 8a. The annular instrument current transformer 11 is arranged within the branch outlet 8a. The instrument current transformer 11 surrounds the conductor arranged within the branch outlet 8a and measures a current carried across this conductor.

An operating device 12 for the circuit breaker 8 is provided in an upper portion of the circuit breaker 8. An LCP (Local Control Panel) 13 is provided laterally to the circuit breaker 8. The LCP 13 drives the operating device 12 in response to a switch command signal.

The cylindrical inclined connection tank 14 (second inclined connection tank) is connected to the branch outlet 8a. An axis of the inclined connection tank 14 is arranged to be inclined with respect to the axis of the circuit breaker 8 or the connection tank 3. Furthermore, a side surface of an upper end of the inclined connection tank 14 is connected to the branch outlet 8a. That is, a branch outlet 14a is provided on the side surface of the upper end of the inclined connection tank 14, and this branch outlet 14a is coupled to the branch outlet 8a of the circuit breaker 8. The branch outlet 14a is led out substantially in parallel to the axis of the branch outlet 8a. A lower end of the inclined connection tank 14 is arranged on a side of a connection tank 27,for which reason the inclined connection tank 14 is inclined with respect to the axis of the connection tank 3 as described above. The connection tank 27 constitutes the bus-bar connection unit for the bus bar 1 and is arranged to face the connection tank 3 in a direction parallel to the bus bars 1 and 2.

A generally L-shaped connection tank 15 is coupled to the lower end of the inclined connection tank 14. A connection bus bar 16 (second connection bus bar) extending substantially horizontally via this connection tank 15 is connected to the inclined connection tank 14. The Connection bus bar 16 extends in a direction substantially orthogonal to the bus bars 1 and 2. Furthermore, the disconnecting switch 17 (fourth disconnecting switch) with an earth switch is connected to one end of the connection bus bar 16. That is, the disconnecting switch 17 is connected to one end of the connection bus bar 16, and the connection tank 15 and the inclined connection tank 14 are connected to the other end of the connection bus bar 16.

The connection bus bar 16 is arranged between the connection tanks 3 and 27 and an extending direction of the connection bus bar 16 is a direction substantially orthogonal to axes of the connection tanks 3 and 27. Furthermore, an operating device 18 for the disconnecting switch 17 is provided in an upper portion of the disconnecting switch 17, and the earth switch 9 is provided on a side surface of the disconnecting switch 17. An operating device 91 for the earth switch 9 is provided on the earth switch 9. The earth switch is not necessarily added to the disconnecting switch 17. The connection bus bar 16 is configured to accommodate a conductor within a cylindrical connection bus bar tank, and this connector is connected to a circuit creaking unit 32.

As described above, the bus bar 2 is configured so that the bus bar ends of the bus bar 2 are arranged face to face in the installation portion of the bus-bar connection unit for the bus bar 2, the disconnecting switch 5 is connected to one of the face-to-face bus bar ends, and the disconnecting switch 17 is connected to the other face-to-face bus bar end. The bus-bar connection unit for the bus bar 2 partitions the bus bar 2 by connecting the bus bar 2 in a switchable manner.

An arrangement configuration of the bus-bar connection unit for the bus bar 1 (first bus-bar connection unit) is explained next. In the bus-bar connection unit for the bus bar 1, the cylindrical connection tank 27 (first connection tank) having, for example, two branch outlets provided on a side surface is installed with an axis thereof set perpendicular to the installation surface. That is, the connection tank 27 is a so-called vertical type. Furthermore, for example, a lower branch outlet 27a and an upper branch outlet 27b are led out from the side surface of the connection tank 27 substantially horizontally in the same direction. The lead-out direction of the branch outlets 27a and 27b is the same as that of the branch outlets 3a and 3b. Further, the branch outlet 27a is provided at the same height as that of, for example, the bus bar 2, and the branch outlet 27b is provided at the same height as that of, for example, the bus bar 1.

The disconnecting switch 35 (first disconnecting switch) with an earth switch is connected to the branch outlet 27b. An operating device 36 for the disconnecting switch 35 is provided in an upper portion of the disconnecting switch 35, and the earth switch 22 is provided on a side surface of the disconnecting switch 35. An operating device 92 for the earth switch 22 is provided on the earth switch 22. The earth switch is not necessarily added to the disconnecting switch 35.

The bus bar 1 extends in a direction substantially orthogonal to axes of the branch outlets 27a and 27b and the axis of the connection tank 27. The bus bar 1 extends substantially horizontally and is arranged above the bus bar 2 substantially in parallel to the bus bar 2. Furthermore, bus bar ends of the bus bar 1 are arranged face to face in an installation portion of the bus-bar connection unit for the bus bar 1. Therefore, as shown in FIG. 3, a gap 81 is provided between the bus bar ends of the bus bar 1. The disconnecting switch 35 is connected to one of the face-to-face bus bar ends of the bus bar 1.

A conductor that is connected to the disconnecting switch 35 is arranged within the connection tank 27, and this connector that serves as an energization unit is introduced to the circuit breaker 25 (first circuit breaker) arranged in an upper portion of the connection tank 27. Furthermore, the annular instrument current transformer 34 is arranged in an inner upper portion of the connection tank 27. The instrument current transformer 34 surrounds the conductor provided within the connection tank 27 and measures a current carried across the conductor. No device is connected to the lower branch outlet 27a and the lower branch outlet 27a is covered with a lid.

The vertical circuit breaker 25 is arranged in the upper portion of the connection tank 27. That is, the circuit breaker 25 is configured to accommodate the circuit breaking unit 32 within a cylindrical circuit breaker tank. The circuit breaker tank is arranged on the same axis as that of the connection tank 27, and the circuit breaker tank and the connection tank 27 are coupled to each other by, for example, fastening flanges of the circuit breaker tank and the connection tank 27, respectively. The circuit breaker tank of the circuit breaker 25 is shorter than the connection tank 27, for example. For example, one branch outlet 25a is provided on a side surface of the circuit breaker tank of the circuit breaker 25. The branch outlet 25a is led out substantially horizontally in a direction substantially orthogonal to the axis of the circuit breaker tank. For example, the lead-out direction of the branch outlet 25a is opposite to that of the branch outlets 27a and 27b. The circuit breaker tank of the circuit breaker 25 can be formed integrally with the connection tank 27. That is, the circuit breaker tank including the connection tank 27 can be used for the circuit breaker 25. In this case, the circuit breaker 25 includes the three branch outlets 27a, 27b, and 25a. The connection tank 27 can be set equal in shape and size to the connection tank 3. The circuit breaker tank of the circuit breaker 25 can be set equal in shape and size to the circuit breaker tank of the circuit breaker 8.

The conductor within the connection tank 27 is connected to one end of the circuit breaking unit 32. The conductor that is connected to the other end of the circuit breaking unit 32 is introduced into an inclined connection tank 24 via the branch outlet 25a. The annular instrument current transformer 33 is arranged within the branch outlet 25a. The instrument current transformer 33 surrounds the conductor arranged within the branch outlet 25a and measures a current carried across this conductor.

An operating device 30 for the circuit breaker 25 is provided in an upper portion of the circuit breaker 25. An LCP (Local Control Panel) 31 is provided laterally to the circuit breaker 25.

The cylindrical inclined connection tank 24 (first inclined connection tank) is connected to the branch outlet 25a. An axis of the inclined connection tank 24 is arranged to be inclined with respect to the axis of the circuit breaker 25 or the connection tank 27. Furthermore, a side surface of an upper end of the inclined connection tank 24 is connected to the branch outlet 25a. That is, a branch outlet 24a is provided on the side surface of the upper end of the inclined connection tank 27, and this branch outlet 24a is coupled to the branch outlet 25a of the circuit breaker 25. The branch outlet 24a is led out substantially in parallel to the axis of the branch outlet 25a. The inclined connection tank 24 is shorter than the inclined connection tank 14. That is, an axial length of the inclined connection tank 24 is shorter than that of the inclined connection tank 14. A lower end of the inclined connection tank 24 is arranged on a side of the connection tank 3, for which reason the inclined connection tank 24 is inclined in a direction opposite to the inclining direction of the connection tank 14. The lower end of the inclined connection tank 14 is arranged below that of the inclined connection tank 24.

As shown in FIG. 3, in the present embodiment, the inclined connection tanks 14 and 24 different in dimensions are inclined in directions Opposite to each other. The connection bus bar 16 that is connected to the inclined connection tank 14 and a connection bus bar 22 that is connected to the inclined connection tank 24 are arranged so as to at least overlap each other in the axial direction of the bus bars 1 and 2. That is, although being arranged away from each other, the connection bus bars 16 and 22 are arranged so as to at least overlap each other in, for example, a plan view from up to down. In FIG. 3, the lower end of the inclined connection tank 24 is arranged obliquely upward in a view from the lower end of the inclined connection tank 14, and the connection bus bars 16 and 22 are arranged so as to overlap each other in a plan view. The bus-bar connection unit can be configured so that the lower end of the inclined connection tank 24 is arranged vertically upward of the lower end of the inclined connection tank 14 by adjustment of a length of the circuit breaker 25 or the like, and so that the connection bus bar 22 is completely superimposed on the connection bus bar 16 in a plan view.

A generally L-shaped connection tank 23 is coupled to the lower end of the inclined connection tank 24. The connection bus bar 22 (first connection bus bar) extending substantially horizontally via this connection tank 23 is connected to the inclined connection tank 24. Furthermore, the disconnecting switch 20 (second disconnecting switch) with an earth switch is connected to one end of the connection bus bar 22. That is, the disconnecting switch 20 is connected to one end of the connection bus bar 22 and the connection tank 23 and the inclined connection tank 24 are connected to the other end of the connection bus bar 22.

The connection bus bar 22 is arranged between the connection tanks 3 and 27, is substantially parallel to the connection bus bar 16, and is arranged upward of the connection bus bar 16, or to be specific, obliquely upward of the connection bus bar 16 on a side of the circuit breaker 25. An operating device 21 for the disconnecting switch 20 is provided in an upper portion of the disconnecting switch 20, and the earth switch 19 is provided on a side surface of the disconnecting switch 20. An operating device 93 for the earth switch 19 is provided on the earth switch 19. The earth switch is not necessarily added to the disconnecting switch 20. The connection bus bar 22 is configured to accommodate a conductor within a cylindrical connection bus bar tank, and this connector is connected to the circuit breaking unit 32. The disconnecting switches 5, 17, 20, and 35 constitute, for example, disconnecting switches integral with bus bars, respectively.

As described above, the bus bar 1 is configured so that the bus bar ends of the bus bar 1 are arranged face to face in the installation portion of the bus-bar connection unit for the bus bar 1, the disconnecting switch 35 is connected to one of the face-to-face bus bar ends, and so that the disconnecting switch 20 is connected to the other face-to-face bus bar end. The bus-bar connection unit for the bus bar 1 partitions the bus bar 1 by connecting the bus bar 1 in a switchable manner.

According to the present embodiment, the inclined connection tanks 14 and 24 different in dimensions are inclined in directions opposite to each other. The connection bus bar 16 that is connected to the inclined connection tank 14 and the connection bus bar 22 that is connected to the inclined connection tank 24 are arranged so as to at least overlap each other in the axial direction of the bus bars 1 and 2. That is, although being arranged away from each other, the connection bus bars 16 and 22 are arranged so as to at least overlap each other in, for example, a plan view from up to down. With this arrangement configuration, a distance between the connection bus bars 16 and 22 in the axial direction of the bus bars 1 and 2 is reduced. Therefore, it is possible to reduce dimensions of the bus-bar connection unit (I) in the axial direction of the bus bars 1 and 2 (that is, it is possible to reduce a distance between the first and second bus-bar connection units), and to realize a reduction in an installation area of the gas-insulated switchgear.

Meanwhile, with the configuration shown in FIGS. 4 to 6 of Patent Literature 2, the gas-insulated switchgear is configured so as to be able to open or close one of the bus bars that constitute double bus bars using the paired disconnecting switches and the circuit breaker. This connection structure needs the space for arranging the four disconnecting switches for the both bus bars constituting the double bus bars. On the other hand, according to the present embodiment, it suffices that the bus-bar connection unit (I) in the axial direction of the bus bars 1 and 2 has dimensions enough to secure a space for arranging substantially three disconnecting switches. Therefore, as compared to the conventional technique, the dimensions of the gas-insulated switchgear in the axial direction of the bus bars 1 and 2 are reduced. FIGS. 1 to 3 of Patent Literature 2 depict an example of the configuration in which the inclined connection bus bar connects the disconnecting switches. However, this configuration does not include the circuit breaker. To change the switchgear for partitioning the bus bars using the circuit breaker, it is necessary to remove the inclined connection bus bar. The configuration shown in FIGS. 4 to 6 is a configuration obtained by actually removing the inclined connection bus bar. This means that FIGS. 1 to 3 of Patent Literature 2 depict the use of the inclined connection bus bar but that the inclined connection bus bar differs from those according to the present embodiment both in function and configuration.

According to the present embodiment, the circuit breaker tank of the circuit breaker 8, for example, is coupled to the connection tank 3, and the tank of the circuit breaker 25, for example, is coupled to the connection tank 27. With this configuration, both the circuit breakers 8 and 25 are made smaller in size and simpler in configuration. Furthermore, with this configuration, when only the circuit breakers 8 and 25 are broken down, the broken down portions are limited and thus a breaking-down operation is easy to perform. Because gas segments for the broken down portions are also limited, a gas-leakage preventing operation is easy to perform. Moreover, shapes of the circuit breakers 8 and 25 can be made common to those of other units, as described later.

Meanwhile, it is possible to decrease the number of components when the circuit breaker tank of the circuit breaker 8 is formed integrally with the connection tank 3 and the tank of the circuit breaker 25 is formed integrally with the connection tank 27.

According to the present embodiment, the gas-insulated switchgear is configured to provide the inclined connection tank in each of the first and second bus-bar connection units; however, the gas-insulated switchgear can be configured to provide the inclined connection tank only in one of the first and second bus-bar connection units. Even with this configuration, it is possible to reduce the dimensions of the bus-bar connection unit (I) in the axial direction of the bus bars 1 and 2.

When the inclined connection tank is provided only in the second bus-bar connection unit, for example, the bus-bar connection unit (I) can be kept equal in length in the axial direction of the bus bars 1 and 2 to that shown in FIG. 3 by providing, for example, an L-tank that connects the branch outlet 25a to the connection tank 23 in place of the inclined connection tank 24 while keeping the inclined connection tank 14 left as it is. That is, it suffices to arrange the connection tanks 3 and 27 at a predetermined distance, to provide the inclined connection tank in either the first or second bus-bar connection unit, to arrange the connection bus bar in an available space between the connection tanks 3 and 27 in the other unit, and to provide the tank that connects the connection bus bar to the branch outlet of the circuit breaker in place of the inclined connection tank. In the present embodiment, the inclined connection tanks 14 and 24 can be made simpler in configuration because the inclined connection tanks 14 and 24 are both linear.

Furthermore, according to the present embodiment, the connection tank 3 includes the branch outlets 3a and 3b and the connection tank 27 includes the branch outlets 27a and 27b. However, no devices are connected to the branch outlets 3b and 27a. Therefore, it is possible to achieve similar effects by setting the number of branch outlets provided on each of the connection tanks 3 and 27 to one, providing only the branch outlet 3a on the connection tank 3, and providing only the branch outlet 27b on the connection tank 27. A cost reduction can be realized as compared to a case of creating dedicated components for the connection tanks 3 and 27 because the tanks equal in shape and size are applied to the respective connection tanks 3 and 27 according to the present embodiment.

### Second embodiment.

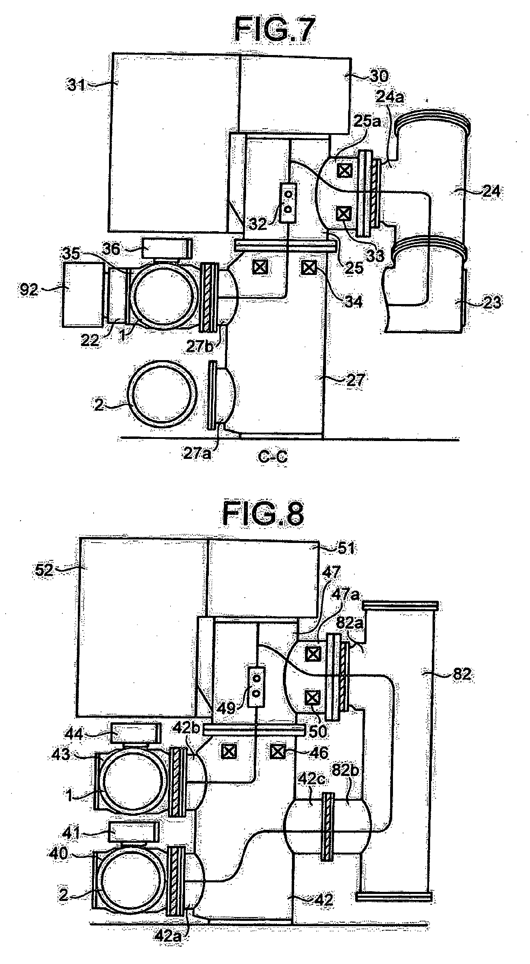

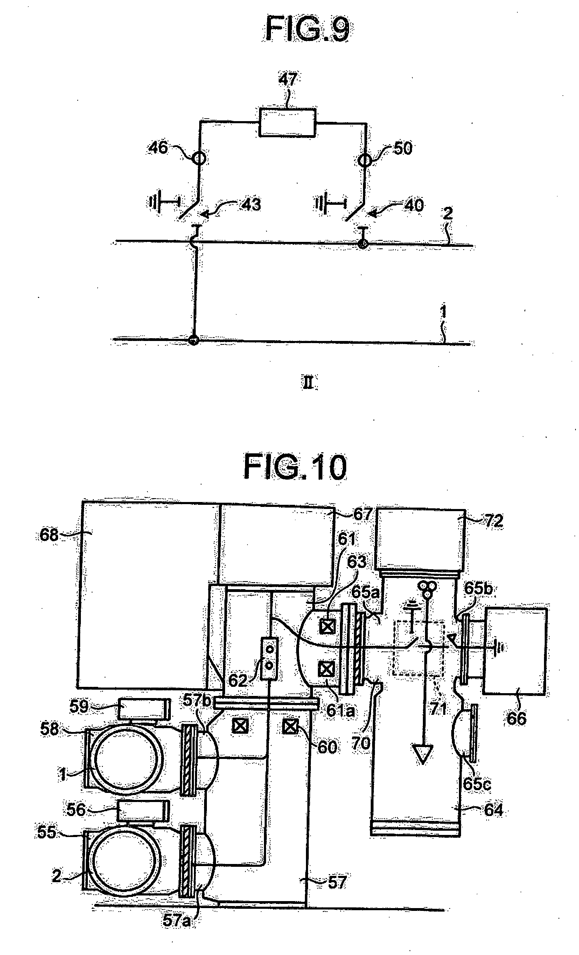

In a second embodiment of the present invention, a configuration of the bus-bar communication unit (II) described with reference to FIGS. 1 and 2 is explained. The bus-bar connection unit (I) is as explained in the first embodiment. FIG. 8 is a side view of a configuration of the bus-bar communication unit (II) in the gas-insulated switchgear according to the present embodiment, and FIG. 9 is a single-line diagram of the bus-bar communication unit (II). The configuration of the bus-bar communication unit (II) is explained below with reference to FIGS. 1, 2, 8, and 9.

As shown in FIG. 9, the bus-bar communication unit (II) communicates the bus bars 1 and 2 with each other. A disconnecting switch 43 with an earth switch, an instrument current transformer 46, a circuit breaker 47, an instrument current transformer 50, and a disconnecting switch 40 with an earth switch are connected in this order between the bus bars 1 and 2.

As shown in FIG. 8, a cylindrical connection tank 42 (third connection tank) having, for example, three branch outlets 42a, 42b, and 42c provided on a side surface is installed with an axis thereof set perpendicular to the installation surface. That is, the connection tank 42 is a so-called vertical type.

A lead-out direction of the branch outlets 42a and 42b is the same as that of the branch outlets 3a, 3b, 27a, and 27b in the bus-bar connection unit (I) explained in the first embodiment. For example, the branch outlet 42c is led out to a side opposite in direction to the branch outlets 42a and 42b. The branch outlet 42a is provided at the same height as that of the bus bar 2, for example, and the branch outlet 42b is provided at the same height as that of the bus bar 1, for example. The branch outlet 42c is provided at an intermediate height, for example, between the heights of the branch outlets 42a and 42b. The bus bars 1 and 2 extend in a direction substantially orthogonal to axes of the branch outlets 42a and 42b and the axis of the connection tank 42.

The disconnecting switch 40 (fifth disconnecting switch) with an earth switch is connected to the branch outlet 42a. An operating device 41 for the disconnecting switch 40 is provided in an upper portion of the disconnecting switch 40. The earth switch is not necessarily added to the disconnecting switch 40. The bus bar 2 is connected to the disconnecting switch 40. For example, the disconnecting switch 40 constitutes a disconnecting switch integral with a bus bar.

The disconnecting switch 43 (sixth disconnecting switch) with an earth switch is connected to the branch outlet 42b. An operating device 44 for the disconnecting switch 43 is provided in an upper portion of the disconnecting switch 43. The earth switch is not necessarily added to the disconnecting switch 43. The bus bar 1 is connected to the disconnecting switch 43. For example, the disconnecting switch 43 constitutes a disconnecting switch integral with a bus bar.

A conductor that is connected to the disconnecting switch 43 is arranged within the connection tank 42, and this connector that serves as an energization unit is introduced to the circuit breaker 47 (third circuit breaker) arranged in an upper portion of the connection tank 42. Furthermore, the annular instrument current transformer 46 is arranged in an inner upper portion of the connection tank 42. The instrument current transformer 46 surrounds the conductor provided within the connection tank 42 and measures a current carried across the conductor.

The vertical circuit breaker 47 is arranged in the upper portion of the connection tank 42. That is, the circuit breaker 47 is configured to accommodate a circuit breaking unit 49 within a cylindrical circuit breaker tank. The circuit breaker tank is arranged on the same axis as that of the connection tank 42, and the circuit breaker tank and the connection tank 42 are coupled to each other by, for example, fastening flanges of the circuit breaker tank and the connection tank 42, respectively. The circuit breaker tank of the circuit breaker 47 is shorter than the connection tank 42, for example. For example, one branch outlet 47a is provided on a side surface of the circuit breaker tank of the circuit breaker 47. The branch outlet 47a is led out substantially horizontally in a direction substantially orthogonal to the axis of the circuit breaker tank. For example, the lead-out direction of the branch outlet 47a is opposite to that of the branch outlets 42a and 42b. The circuit breaker tank of the circuit breaker 47 can be formed integrally with the connection tank 42. That is, the circuit breaker tank including the connection tank 42 can be used for the circuit breaker 47. In this case, the circuit breaker 47 includes the three branch outlets 42a to 42c and 47a.

Furthermore, in the example of FIG. 8, the circuit breaker tank of the circuit breaker 47 is equal in shape and size to the circuit breakers 8 and 25 in the bus-bar connection unit (I) explained in the first embodiment. In this case, it is advantageously possible to use common circuit breaker tanks. Furthermore, the connection tank 42 is equal in shape and size to the connection tanks 3 and 27 in the bus-bar connection unit (I) explained in the first embodiment except that the branch outlet 42c is provided on the connection tank 42.

The conductor provided within the connection tank 42 is connected to the disconnecting switch 43 and to one end of the circuit breaking unit 49. The conductor that is connected to the other end of the circuit breaking unit 49 is introduced into a connection tank 82 via the branch outlet 47a. The annular instrument current transformer 50 is arranged within the branch outlet 47a. The instrument current transformer 50 surrounds the conductor arranged within the branch outlet 47a and measures a current carried across this conductor.

An operating device 51 for the circuit breaker 47 is provided in an upper portion of the circuit breaker 47. An LCP (Local Control Panel) 52 is provided laterally to the circuit breaker 47.

The cylindrical connection tank 82 (fourth inclined connection tank) is connected to the branch outlet 47a. An axis of the connection tank 82 is parallel to the axes of the circuit breaker 47 and the connection tank 42. That is, the connection tank 82 is a so-called vertical type. Furthermore, a side surface of an upper end of the connection tank 82 is connected to the branch outlet 47a. That is, a branch outlet 82a is provided on the side surface of the upper end of the connection tank 82, and this branch outlet 82a is coupled to the branch outlet 47a of the circuit breaker 47. The branch outlet 82a is led out substantially in parallel to the axis of the branch outlet 47a. A branch outlet 82b is provided on a side surface of a lower end of the connection tank 82, and this branch outlet 82b is coupled to the branch outlet 42c of the connection tank 42. The branch outlet 82b is led out substantially in parallel to the axis of the branch outlet 42c.

The conductor that is connected to the other end of the circuit breaking unit 49 is introduced to the connection tank 42 via the connection tank 82 and is further connected to the disconnecting switch 40.

According to the present embodiment, the connection tank 42 is provided in a lower portion of the circuit breaker 47. Therefore, it is possible to use the circuit breaker tank equal in shape and size to those of the circuit breakers 8 and 25 used in the bus-bar connection unit (I) in the bus-bar communication unit (II), and to reduce the manufacturing cost by using the common circuit breaker tanks. Furthermore, the connection tank 42 is equal in shape and size to the connection tanks 3 and 27 used in the bus-bar connection unit (I) except for a portion of the branch outlet 42c. This similarly contributes to reducing the manufacturing cost.

### Third embodiment.

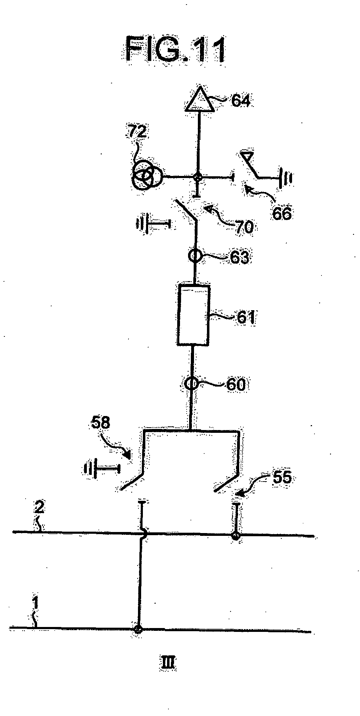

In a third embodiment of the present invention, a configuration of the line unit (III) described with reference to FIGS. 1 and 2 is explained. The bus-bar connection unit (I) and the bus-bar communication unit (II) are as described in the first and second embodiments, respectively. FIG. 10 is a side view of a configuration of the line unit (III) in the gas-insulated switchgear according to the present embodiment, and FIG. 11 is a single-line diagram of the line unit (III). The configuration of the line unit (III) is explained below with reference to FIGS. 1, 2, 10, and 11.

As shown in FIG. 11, the line unit (III) includes a disconnecting switch 58 with an earth switch, an earth switch 55 that is connected to the bus bar 2, an instrument current transformer 60 that is connected to both the disconnecting switch 58 and the earth switch 55, a circuit breaker 61 that is connected to the instrument circuit transformer 60, an instrument current transformer 63 that is connected to the circuit breaker 61, a disconnecting switch 70 with an earth switch that is connected to the instrument current transformer 63, and an instrument voltage transformer 72, a cable head 64, and an earth switch 66 that is connected to the disconnecting switch 70.

As shown in FIG. 10, a cylindrical connection tank 57 (fifth connection tank) having, for example, two branch outlets 57a and 57b provided on a side surface is installed with an axis thereof set perpendicular to the installation surface. That is, the connection tank 57 is a so-called vertical type.

A lead-out direction of the branch outlets 57a and 57b is the same as that of the branch outlets 3a, 3b, 27a, and 27b in the bus-bar connection unit (I) explained in the first embodiment. Furthermore, the branch outlet 57a is provided at the same height as that of, for example, the bus bar 2, and the branch outlet 57b is provided at the same height as that of, for example, the bus bar 1.

The earth switch 55 is connected to the branch outlet 57a. An operating device 56 for the earth switch 55 is provided in an upper portion of the earth switch 55. Alternatively, the earth switch 55 can be replaced by a disconnecting switch with an earth switch, for example.

The disconnecting switch 58 (seventh disconnecting switch) with an earth switch is connected to the branch outlet 57b. An operating device 59 for the disconnecting switch 58 is provided in an upper portion of the disconnecting switch 58. The earth switch is not necessarily added to the disconnecting switch 58. The bus bar 1 is connected to the disconnecting switch 58. The disconnecting switch 58 constitutes a disconnecting switch integral with a bus bar, for example.

A conductor that is connected to the disconnecting switch 58 and the earth switch 55 is arranged within the connection tank 57, and this connector that serves as an energization unit is introduced to the circuit breaker 61 (fourth circuit breaker) arranged in an upper portion of the connection tank 57. Furthermore, the annular instrument current transformer 60 is arranged in an inner upper portion of the connection tank 57. The instrument current transformer 60 surrounds the conductor provided within the connection tank 57 and measures a current carried across the conductor.

The vertical circuit breaker 61 is arranged in the upper portion of the connection tank 57. That is, the circuit breaker 61 is configured to accommodate a circuit breaking unit 62 within a cylindrical circuit breaker tank. The circuit breaker tank is arranged on the same axis as that of the connection tank 57, and the circuit breaker tank and the connection tank 57 are coupled to each other by, for example, fastening flanges of the circuit breaker tank and the connection tank 57, respectively. The circuit breaker tank of the circuit breaker 61 is shorter than the connection tank 57, for example. For example, one branch outlet 61a is provided on a side surface of the circuit breaker tank of the circuit breaker 61. The branch outlet 61a is led out substantially horizontally in a direction substantially orthogonal to the axis of the circuit breaker tank. For example, the lead-out direction of the branch outlet 61a is opposite to that of the branch outlets 57a and 57b. The circuit breaker tank of the circuit breaker 61 can be formed integrally with the connection tank 57. That is, the circuit breaker tank including the connection tank 57 can be used for the circuit breaker 61. In this case, the circuit breaker 61 includes the three branch outlets 57a, 57b, and 61a.

Furthermore, in the example of FIG. 10, the circuit breaker tank of the circuit breaker 61 is equal in shape and size to those of the circuit breakers 8 and 25 in the bus-bar connection unit (I) explained in the first embodiment. In this case, it is advantageously possible to use common circuit breaker tanks. Furthermore, the connection tank 57 is equal in shape and size to the connection tanks 3 and 27 in the bus-bar connection unit (I) explained in the first embodiment.

The conductor provided within the connection tank 57 is connected to one end of the circuit breaking unit 62. The annular instrument current transformer 63 is arranged within the branch outlet 61a. The instrument current transformer 63 surrounds the conductor arranged within the branch outlet 61a and measures a current carried across this conductor.

Further, the conductor that is connected to the other end of the circuit breaking unit 62 is connected to a line-side device via the branch outlet 61a. The line-side device includes the disconnecting switch 70 (line-side disconnecting switch) with an earth switch, the earth switch 66 for line-side earthing, the instrument voltage transformer 72 arranged in an upper portion of the disconnecting switch 70, the cable head 64, for example, arranged in a lower portion of the disconnecting switch 70, and the like. The disconnecting switch 70 is arranged within a cylindrical tank including three branch outlets 65a to 65c, for example. The branch outlet 65a is led out toward the circuit breaker 61 and coupled to the branch outlet 61a. The branch outlet 65b is led out to a side opposite to the circuit breaker 61 and is connected to the earth switch 66. The branch outlet 65c is led out in the same direction as that of the branch outlet 65b below the branch outlet 65b but no device is connected to the branch outlet 65c. An operating device 71 for the disconnecting switch 70 is provided on a side surface of the tank accommodated by the disconnecting switch 70. The cable head 64 is supported by, for example, a mount (not shown). This configuration of the line device is only an example and the configuration thereof is not limited thereto.

An operating device 67 for the circuit breaker 61 is provided in an upper portion of the circuit breaker 61. An LCP (Local Control Panel) 68 is provided laterally to the circuit breaker 61.

The LCP 68 can be arranged separately from the circuit breaker 61. In this case, the branch outlet 61a can be led out toward the bus bars 1 and 2 and the line-side device can be connected to the branch outlet 61a led out toward the bus bars 1 and 2. In this case, it is configured to arrange the bus bars 1 and 2 between the line device and the circuit breaker 61.

According to the present embodiment, the connection tank 57 is provided in a lower portion of the circuit breaker 61. Therefore, it is possible to use a circuit breaker tank equal in shape and size to the circuit breakers 8 and 25 used in the bus-bar connection unit (I), and to reduce the manufacturing cost by using the common circuit breaker tanks. Furthermore, the connection tank 57 is equal in shape and size to the connection tanks 3 and 27 used in the bus-bar connection unit (I). This similarly contributes to reducing the manufacturing cost.

In the first to third embodiments, while a gas-insulated switchgear including the bus-bar connection unit (I), the bus-bar communication unit (II), and the line units (III) has been explained, the gas-insulated switchgear can also include a voltage transformer unit according to its configuration. The voltage transformer unit is configured not to include the instrument voltage transformer 72 in the configuration shown in FIG. 10. In the third embodiment, the voltage transformer unit can be constituted by changing the configuration of the connected line-side device. The line unit (III) is used in a comprehensive sense so as to include the voltage transformer unit.

### Industrial Applicability

As described above, the present invention is useful as a gas-insulated switchgear of a double bus bar system.

### Reference Signs List

1, 2 bus bar
3a, 3b, 8a, 14a, 24a, 25a branch outlet
27a, 27b, 42a to 42c branch outlet
47a, 57a, 57b, 61a, 65a to 65c, 82a, 82b branch outlet
3, 15, 23, 27, 3-7, 42, 57, 82 connection tank
4 each switch
5, 17, 20, 35, 40, 43, 58, 70 disconnecting switch
6, 12, 18, 21, 30, 36, 41, 44, 51 operating device
56, 59, 67, 71, 90 to 93 operating device
7, 11, 33, 34, 46, 50, 60, 63 instrument current transformer
8, 25, 32, 47, 61 circuit breaker
9, 19, 22, 55, 66 earth switch
10, 49, 62 circuit breaking unit
14, 24 inclined connection tank
16, 22 connection bus bar
26, 81 gap
64 cable Head
72 instrument voltage transformer

## Claims

1. A gas-insulated switchgear of a double bus bar system, comprising:
a first bus bar (1);
a second bus bar (2) that is arranged below the first bus bar (1) and is parallel to the first bus bar (1);
a first bus-bar connection unit that is connected between face-to-face bus bar ends of the first bus bar (1) and partitions the first bus bar (1); and
a second bus-bar connection unit that is connected between face-to-face bus bar ends of the second bus bar (2) and partitions the second bus bar (2), **characterized in that**
the first bus-bar connection unit includes
a first connection tank (27) of a vertical shape that includes a branch outlet led out in a horizontal direction orthogonal to the first bus bar (1), where one of the bus bar ends of the first bus bar (1:) is connected to the branch outlet,
a first circuit breaker (25) of a vertical shape that is arranged in an upper portion of the first connection tank (27), and that includes a branch outlet on a side opposite to the branch outlet of the first connection tank (27),
a first inclined connection tank (24) that has a side surface of an upper end connected to the branch outlet of the first circuit breaker (25), that has a lower end arranged on a side of the other bus bar end of the first bus bar (1), and that is inclined with respect to the first connection tank (27), and
a first connection bus bar (22) that has one end connected to the lower end of the first inclined connection tank (24), that extends in a horizontal direction orthogonal to the first bus bar (1), and that has the other end connected to the other bus bar end of the first bus bar (1), and
the second bus-bar connection unit includes
a second connection tank (3) of a vertical shape that is arranged to face the first connection tank (27) across the first connection bus bar (22) in an extending direction of the second bus bar (2), and that includes a branch outlet led out in a horizontal direction orthogonal to the second bus bar (2), where one of the bus bar ends of the second bus bar (2) is connected to the branch outlet,
a second circuit breaker (8) of a vertical shape that is arranged in an upper portion of the second connection tank (3), and that includes a branch outlet on a side opposite to the branch outlet of the second connection tank (3),
a second inclined connection tank (14) that is longer than the first inclined connection tank (24), that has a side surface of an upper end connected to the branch outlet of the second circuit breaker (8), that has a lower end arranged below the lower end of the first inclined connection tank (24), and that is inclined in an opposite direction to an inclining direction of the first inclined connection tank (24), and
a second connection bus bar (16) that has one end connected to the lower end of the second inclined connection tank (14), that extends in parallel to the first connection bus bar (22), and that has the other end connected to the other bus bar end of the second bus bar (2).

2. The gas-insulated switchgear according to claim 1, wherein
the first connection tank (37) includes upper and lower branch outlets led out in a horizontal direction orthogonal to the first bus bar (1), where one of the bus bar ends of the first bus bar (1) is connected to the upper branch outlet, and
the second connection tank (3) includes upper and lower branch outlets led out in a horizontal direction orthogonal to the second bus bar (2), where one of the bus bar ends of the second bus bar (2) is connected to the lower branch outlet.

3. The gas-insulated switchgear according to claim 2, wherein the first and second connection bus bars (22, 16) are arranged to at least overlap each other in an extending direction of the first and second bus bars (1, 2).

4. The gas-insulated switchgear according to claim 2, wherein
the first bus-bar connection unit includes
a first disconnecting switch (35) that is connected to the upper branch outlet of the first connection tank (27), and that is connected to one of the bus bar ends of the first bus bar (1), and
a second disconnecting switch (20) that is connected to the other bus bar end of the first connection bus bar (22), and that is connected to the other bus bar end of the first bus bar (1), and
the second bus-bar connection unit includes
a third disconnecting switch (5) that is connected to the lower branch outlet of the second connection tank (3), and that is connected to one of the bus bar ends of the second bus bar (2), and
a fourth disconnecting switch (17) that is connected to the other end of the second connection bus bar (16), and that is connected to the other bus bar end of the Second bus bar (2).

5. The gas-insulated switchgear according to claim 2, wherein
a tank of the first circuit breaker (25) is coupled to the first connection tank (27), and
a tank of the second circuit breaker (8) is coupled to the second connection tank (3).

6. The gas-insulated switchgear according to claim 2, wherein
a tank of the first circuit breaker (25) is formed integrally with the first connection tank (27), and
a tank of the second circuit breaker (8) is formed integrally with the second connection tank (3).

7. The gas-insulated switchgear according to claim 2, wherein
a tank length of the first circuit breaker (25) is shorter than a tank length of the first connection tank (27), and
a tank length of the second circuit breaker (8) is shorter than a tank length of the second connection tank (3).

8. The gas-insulated switchgear according to claim 2, wherein
the first and second connection tanks 27, 3) are equal in shape and size, and
tanks of the first and second circuit breakers (25, 8) are equal in shape and size.

9. The gas-insulated switchgear according to claim 2, wherein
the upper and lower branch outlets of the first connection tank (27) are arranged at a same height as heights of the first and second bus bars (1, 2), respectively, and
the upper and lower branch outlets of the second connection tank (3) are arranged at a same height as the heights of the first and second bus bars (1, 2), respectively.

10. The gas-insulated switchgear according to claim 2, comprising a bus-bar communication unit that communicates the first bus bar (1) with the second bus bar (2), wherein
the bus-bar communication unit includes
a third connection tank (42) of a vertical shape that includes upper and lower branch outlets led out in a same direction as the directions of the branch outlets of the first and second connection tanks (27, 3), respectively, and that includes an intermediate-height branch outlet led out to an opposite side to the upper and lower branch outlets at a height between heights of the upper and lower branch outlets, where the first bus bar (1) is connected to the upper branch outlet and the second bus bar (2) is connected to the lower branch outlet,
a third circuit breaker (47) of a vertical shape that is arranged in an upper portion of the third connection tank (42), and that includes a branch outlet led out to a
same side as the intermediate-height branch outlet included by the third connection tank (42), and
a fourth connection tank (84) of a vertical shape that has a side surface of an upper end connected to the branch outlet of the third circuit breaker (47), and that has a side surface of a lower end connected to the intermediate-height branch outlet.

11. The gas-insulated switchgear according to claim 10, wherein
the bus-bar communication unit includes
a fifth disconnecting switch (40) that is connected to the lower branch outlet of the third connection tank (42), and that is connected to the second bus bar (2), and
a sixth disconnecting switch (43) that is connected to the upper branch outlet of the third connection tank (42), and that is connected to the first bus bar (1).

12. The gas-insulated switchgear according to claim 10, wherein tanks of the first to third disconnecting switches (35, 20, 5) are equal in shape and size.

13. The gas-insulated switchgear according to claim 2, comprising a line unit that is connected to the first and second bus bars (1, 2), wherein
the line unit includes
a fifth connection tank (57) of a vertical shape that includes upper and lower branch outlets let out in a same direction as the direction of the branch outlets of the first and second connection tanks (27, 3), where the first bus bar (1) is connected to the upper branch outlet and the second bus bar (2) is connected to the lower branch bus bar,
a fourth circuit breaker (61) of a vertical shape that is arranged in an upper portion of the fifth connection tank (57), and that includes a branch outlet led out to a same side as or to an opposite side to the upper and lower branch outlets included by the fifth connection tank (57), and
a line side device that is connection to the branch outlet of the fourth circuit breaker (61).

14. The gas-insulated switchgear according to claim 13, wherein
the first, second, and fifth connection tanks (27, 3, 57) are equal in shape and size, and
tanks of the first, second, and fourth circuit breakers (25, 8, 61) are equal in shape and size.

## Patentansprüche

1. Gasisolierte Schaltanlage mit einem Doppelsammelschienensystem, Folgendes aufweisend:
eine erste Sammelschiene (1);
eine zweite Sammelschiene (2), die unter der ersten Sammelschiene (1) angeordnet und parallel zur ersten Sammelschiene (1) ist;
eine erste Sammelschienenverbindungseinheit, die zwischen einander zugewandten Sammelschienenenden der ersten Sammelschiene (1) angeordnet ist und die erste Sammelschiene (1) unterteilt; und
eine zweite Sammelschienenverbindungseinheit, die zwischen einander zugewandten Sammelschienenenden der zweiten Sammelschiene (2) angeordnet ist und die zweite Sammelschiene (2) unterteilt,
**dadurch gekennzeichnet, dass**
die erste Sammelschienenverbindungseinheit umfasst:
einen ersten Verbindungsbehälter (27) mit einer vertikalen Form, der einen Abzweigauslass umfasst, der in einer horizontalen Richtung orthogonal zur ersten Sammelschiene (1) herausgeführt ist, wobei eines der Sammelschienenenden der ersten Sammelschiene (1) an den Abzweigauslass angeschlossen ist,
einen ersten Leistungsschutzschalter (25) mit einer vertikalen Form, der in einem oberen Abschnitt des ersten Verbindungsbehälters (27) angeordnet ist und einen Abzweigauslass auf einer dem Abzweigauslass des ersten Verbindungsbehälters (27) entgegengesetzten Seite umfasst,
einen ersten geneigten Verbindungsbehälter (24), von dem eine Seitenfläche eines oberen Endes an den Abzweigauslass des ersten Leistungsschutzschalters (25) angeschlossen ist, von dem ein unteres Ende auf einer Seite des anderen Sammelschienenendes der ersten Sammelschiene (1) angeordnet ist, und der in Bezug auf den ersten Verbindungsbehälter (27) geneigt ist, und
eine erste Verbindungssammelschiene (22), von der ein Ende an das untere Ende des ersten geneigten Verbindungsbehälters (24) angeschlossen ist, die sich in einer horizontalen Richtung orthogonal zur ersten Sammelschiene (1) erstreckt, und von der das andere Ende an das andere Sammelschienenende der ersten Sammelschiene (1) angeschlossen ist, und
die zweite Sammelschienenverbindungseinheit umfasst:
einen zweiten Verbindungsbehälter (3) mit einer vertikalen Form, welcher dem ersten Verbindungsbehälter (27) über die erste Verbindungssammelschiene (22) in einer Erstreckungsrichtung der zweiten Sammelschiene (2) zugewandt angeordnet ist, und der einen Abzweigauslass umfasst, der in einer horizontalen Richtung orthogonal zur zweiten Sammelschiene (2) herausgeführt ist, wobei eines der Sammelschienenenden der zweiten Sammelschiene (2) an den Abzweigauslass angeschlossen ist,
einen zweiten Leistungsschutzschalter (8) mit einer vertikalen Form, der in einem oberen Abschnitt des zweiten Verbindungsbehälters (3) angeordnet ist und einen Abzweigauslass auf einer dem Abzweigauslass des zweiten Verbindungsbehälters (3) entgegengesetzten Seite umfasst,
einen zweiten geneigten Verbindungsbehälter (14), der länger ist als der erste geneigte Verbindungsbehälter (24), von dem eine Seitenfläche eines oberen Endes an den Abzweigauslass des zweiten Leistungsschutzschalters (8) angeschlossen ist, von dem ein unteres Ende unter dem unteren Ende des ersten geneigten Verbindungsbehälters (24) angeordnet ist, und der in einer zu einer Neigungsrichtung des ersten geneigten Verbindungsbehälters (24) entgegengesetzten Richtung geneigt ist, und
eine zweite Verbindungssammelschiene (16), von der ein Ende an das untere Ende des zweiten geneigten Verbindungsbehälters (14) angeschlossen ist, die sich parallel zur ersten Verbindungssammelschiene (22) erstreckt, und von der das andere Ende an das andere Sammelschienenende der zweiten Sammelschiene (2) angeschlossen ist.

2. Gasisolierte Schaltanlage nach Anspruch 1, wobei
der erste Verbindungsbehälter (27) einen oberen und unteren Abzweigauslass umfasst, die in einer horizontalen Richtung orthogonal zur ersten Sammelschiene (1) herausgeführt sind, wobei eines der Sammelschienenenden der ersten Sammelschiene (1) an den oberen Abzweigauslass angeschlossen ist, und
der zweite Verbindungsbehälter (3) einen oberen und unteren Abzweigauslass umfasst, die in einer horizontalen Richtung orthogonal zur zweiten Sammelschiene (2) herausgeführt sind, wobei eines der Sammelschienenenden der zweiten Sammelschiene (2) an den unteren Abzweigauslass angeschlossen ist.

3. Gasisolierte Schaltanlage nach Anspruch 2, wobei die erste und zweite Verbindungssammelschiene (22, 16) so angeordnet sind, dass sie sich in einer Erstreckungsrichtung der ersten und zweiten Sammelschiene (1, 2) zumindest überlagern.

4. Gasisolierte Schaltanlage nach Anspruch 2, wobei
die erste Sammelschienenverbindungseinheit umfasst:
einen ersten Trennschalter (35), der an den oberen Abzweigauslass des ersten Verbindungsbehälters (27) angeschlossen ist, und der an eines der Sammelschienenenden der ersten Sammelschiene (1) angeschlossen ist, und
einen zweiten Trennschalter (20), der an das andere Sammelschienenende der ersten Verbindungssammelschiene (22) angeschlossen ist, und der an das andere Sammelschienenende der ersten Sammelschiene (1) angeschlossen ist, und
die zweite Sammelschienenverbindungseinheit umfasst:
einen dritten Trennschalter (5), der an den unteren Abzweigauslass des zweiten Verbindungsbehälters (3) angeschlossen ist, und der an eines der Sammelschienenenden der zweiten Sammelschiene (2) angeschlossen ist, und
einen vierten Trennschalter (17), der an das andere Ende der zweiten Verbindungssammelschiene (16) angeschlossen ist, und der an das andere Sammelschienenende der zweiten Sammelschiene (2) angeschlossen ist.

5. Gasisolierte Schaltanlage nach Anspruch 2, wobei
ein Behälter des ersten Leistungsschutzschalters (25) mit dem ersten Verbindungsbehälter (27) verbunden ist, und
ein Behälter des zweiten Leistungsschutzschalters (8) mit dem zweiten Verbindungsbehälter (3) verbunden ist.

6. Gasisolierte Schaltanlage nach Anspruch 2, wobei
ein Behälter des ersten Leistungsschutzschalters (25) integral mit dem ersten Verbindungsbehälter (27) ausgebildet ist, und
ein Behälter des zweiten Leistungsschutzschalters (8) integral mit dem zweiten Verbindungsbehälter (3) ausgebildet ist.

7. Gasisolierte Schaltanlage nach Anspruch 2, wobei
eine Behälterlänge des ersten Leistungsschutzschalters (25) kürzer ist als eine Behälterlänge des ersten Verbindungsbehälters (27), und
eine Behälterlänge des zweiten Leistungsschutzschalters (8) kürzer ist als eine Behälterlänge des zweiten Verbindungsbehälters (3).

8. Gasisolierte Schaltanlage nach Anspruch 2, wobei
der erste und zweite Verbindungsbehälter (27, 3) in Form und Größe gleich sind, und
die Behälter des ersten und zweiten Leistungsschutzschalters (25, 8) in Form und Größe gleich sind.

9. Gasisolierte Schaltanlage nach Anspruch 2, wobei
der obere und untere Abzweigauslass des ersten Verbindungsbehälters (27) in derselben Höhe wie die Höhen der ersten bzw. zweiten Sammelschiene (1, 2) angeordnet sind, und
der obere und untere Abzweigauslass des zweiten Verbindungsbehälters (3) in derselben Höhe wie die Höhen der ersten bzw. zweiten Sammelschiene (1, 2) angeordnet sind.

10. Gasisolierte Schaltanlage nach Anspruch 2, eine Sammelschieneninverbindungssetzungseinheit umfassend, welche die erste Sammelschiene (1) mit der zweiten Sammelschiene (2) in Verbindung setzt, wobei
die Sammelschieneninverbindungssetzungseinheit umfasst:
einen dritten Verbindungsbehälter (42) mit einer vertikalen Form, der einen oberen und unteren Abzweigauslass umfasst, die in derselben Richtung wie die Richtungen der Abzweigauslässe des ersten bzw. zweiten Verbindungsbehälters (27, 3) herausgeführt sind, und der einen auf einer Zwischenhöhe befindlichen Abzweigauslass umfasst, der zu einer zum oberen und unteren Abzweigauslass entgegengesetzten Seite in einer Höhe zwischen den Höhen des oberen und unteren Abzweigauslasses dort herausgeführt ist, wo die erste Sammelschiene (1) an den oberen Abzweigauslass und die zweite Sammelschiene (2) an den unteren Abzweigauslass angeschlossen ist,
einen dritten Leistungsschutzschalter (47) mit einer vertikalen Form, der in einem oberen Abschnitt des dritten Verbindungsbehälters (42) angeordnet ist, und der einen Abzweigauslass umfasst, der zur selben Seite wie der auf der Zwischenhöhe befindliche Abzweigauslass herausgeführt ist, den der dritte Verbindungsbehälter (42) umfasst, und
einen vierten Verbindungsbehälter (84) mit einer vertikalen Form, von dem eine Seitenfläche eines oberen Endes an den Abzweigauslass des dritten Leistungsschutzschalters (47) angeschlossen ist, und von dem eine Seitenfläche eines unteren Endes an den auf der Zwischenhöhe befindlichen Abzweigauslass angeschlossen ist.

11. Gasisolierte Schaltanlage nach Anspruch 10, wobei
die Sammelschieneninverbindungssetzungseinheit umfasst:
einen fünften Trennschalter (40), der an den unteren Abzweigauslass des dritten Verbindungsbehälters (42) angeschlossen ist, und der an die zweite Sammelschiene (2) angeschlossen ist, und
einen sechsten Trennschalter (43), der an den oberen Abzweigauslass des dritten Verbindungsbehälters (42) angeschlossen ist, und der an die erste Sammelschiene (1) angeschlossen ist.

12. Gasisolierte Schaltanlage nach Anspruch 10, wobei die Behälter des ersten bis dritten Trennschalters (35, 20, 5) in Form und Größe gleich sind.

13. Gasisolierte Schaltanlage nach Anspruch 2, eine Leitungseinheit umfassend, die an die erste und zweite Sammelschiene (1, 2) angeschlossen ist, wobei
die Leitungseinheit umfasst:
einen fünften Verbindungsbehälter (57) mit einer vertikalen Form, der einen oberen und unteren Abzweigauslass umfasst, die in derselben Richtung wie die Richtung der Abzweigauslässe des ersten und zweiten Verbindungsbehälters (27, 3) dort herausgeführt sind, wo die erste Sammelschiene (1) an den oberen Abzweigauslass und die zweite Sammelschiene (2) an den unteren Abzweigauslass angeschlossen ist,
einen vierten Leistungsschutzschalter (61) mit einer vertikalen Form, der in einem oberen Abschnitt des fünften Verbindungsbehälters (57) angeordnet ist, und der einen Abzweigauslass umfasst, der zur selben Seite oder zu einer zum oberen und unteren Abzweigauslass entgegengesetzten Seite herausgeführt ist, die der fünfte Verbindungsbehälter (57) umfasst, und
eine leitungsseitige Vorrichtung, die an den Abzweigauslass des vierten Leistungsschutzschalters (61) angeschlossen ist.

14. Gasisolierte Schaltanlage nach Anspruch 13, wobei
der erste, zweite und fünfte Verbindungsbehälter (27, 3, 57) in Form und Größe gleich sind, und
die Behälter des ersten zweiten und vierten Leistungsschutzschalters (25, 8, 61) in Form und Größe gleich sind.

## Revendications

1. Dispositif de commutation à isolation gazeuse d'un système à double barre bus, comprenant :
une première barre bus (1) ;
une deuxième barre bus (2) qui est agencée sous la première barre bus (1) et qui est parallèle à la première barre bus (1) ;
une première unité de connexion de barre bus qui est connectée entre des extrémités de barre bus se faisant face de la première barre bus (1) et partitionne la première barre bus (1) ; et
une deuxième unité de connexion de barre bus qui est connectée entre des extrémités de barre bus se faisant face de la deuxième barre bus (2) et partitionne la deuxième barre bus (2), **caractérisé en ce que**
la première unité de connexion de barre bus inclut
un premier réservoir de connexion (27) de forme verticale qui inclut une sortie de dérivation menée vers l'extérieur dans une direction horizontale perpendiculaire à la première barre bus (1), sachant qu'une des extrémités de barre bus de la première barre bus (1) est connectée à la sortie de dérivation,
un premier disjoncteur (25) de forme verticale qui est agencé dans une partie supérieure du premier réservoir de connexion (27), et qui inclut une sortie de dérivation d'un côté opposé à la sortie de dérivation du premier réservoir de connexion (27),
un premier réservoir de connexion incliné (24) dont une surface latérale d'une extrémité supérieure est connectée à la sortie de dérivation du premier disjoncteur (25), dont une extrémité inférieure est agencée d'un côté de l'autre extrémité de barre bus de la première barre bus (1), et qui est incliné par rapport au premier réservoir de connexion (27), et
une première barre bus de connexion (22) dont une extrémité est connectée à l'extrémité inférieure du premier réservoir de connexion incliné (24), qui s'étend dans une direction horizontale perpendiculaire à la première barre bus (1), et dont l'autre extrémité est connectée à l'autre extrémité de barre bus de la première barre bus (1), et
la deuxième unité de connexion de barre bus inclut
un deuxième réservoir de connexion (3) de forme verticale qui est agencé pour faire face au premier réservoir de connexion (27) via la première barre bus de connexion (22) dans une direction d'extension de la deuxième barre bus (2), et qui inclut une sortie de dérivation menée vers l'extérieur dans une direction horizontale perpendiculaire à la deuxième barre bus (2), sachant qu'une des extrémités de barre bus de la deuxième barre bus (2) est connectée à la sortie de dérivation,
un deuxième disjoncteur (8) de forme verticale qui est agencé dans une partie supérieure du deuxième réservoir de connexion (3), et qui inclut une sortie de dérivation d'un côté opposé à la sortie de dérivation du deuxième réservoir de connexion (3),
un deuxième réservoir de connexion incliné (14) qui est plus long que le premier réservoir de connexion incliné (24), dont une surface latérale d'une extrémité supérieure est connectée à la sortie de dérivation du deuxième disjoncteur (8), dont une extrémité inférieure est agencée sous l'extrémité inférieure du premier réservoir de connexion incliné (24), et qui est incliné dans une direction opposée à une direction d'inclinaison du premier réservoir de connexion incliné (24), et
une deuxième barre bus de connexion (16) dont une extrémité est connectée à l'extrémité inférieure du deuxième réservoir de connexion incliné (14), qui s'étend parallèlement à la première barre bus de connexion (22), et dont l'autre extrémité est connectée à l'autre extrémité de barre bus de la deuxième barre bus (2).

2. Le dispositif de commutation à isolation gazeuse selon la revendication 1, dans lequel
le premier réservoir de connexion (27) inclut des sorties de dérivation supérieure et inférieure menées vers l'extérieur dans une direction horizontale perpendiculaire à la première barre bus (1), sachant qu'une des extrémités de barre bus de la première barre bus (1) est connectée à la sortie de dérivation supérieure, et
le deuxième réservoir de connexion (3) inclut des sorties de dérivation supérieure et inférieure menées vers l'extérieur dans une direction horizontale perpendiculaire à la deuxième barre bus (2), sachant qu'une des extrémités de barre bus de la deuxième barre bus (2) est connectée à la sortie de dérivation inférieure.

3. Le dispositif de commutation à isolation gazeuse selon la revendication 2, dans lequel la première et la deuxième barre bus de connexion (22, 16) sont agencées pour au moins se chevaucher l'une l'autre dans une direction d'extension de la première et de la deuxième barre bus (1, 2).

4. Le dispositif de commutation à isolation gazeuse selon la revendication 2, dans lequel
la première unité de connexion de barre bus inclut
un premier commutateur de déconnexion (35) qui est connecté à la sortie de dérivation supérieure du premier réservoir de connexion (27), et qui est connecté à une des extrémités de barre bus de la première barre bus (1), et
un deuxième commutateur de déconnexion (20) qui est connecté à l'autre extrémité de barre bus de la première barre bus de connexion (22), et qui est connecté à l'autre extrémité de barre bus de la première barre bus (1), et
la deuxième unité de connexion de barre bus inclut
un troisième commutateur de déconnexion (5) qui est connecté à la sortie de dérivation inférieure du deuxième réservoir de connexion (3), et qui est connecté à une des extrémités de barre bus de la deuxième barre bus (2), et
un quatrième commutateur de déconnexion (17) qui est connecté à l'autre extrémité de la deuxième barre bus de connexion (16), et qui est connecté à l'autre extrémité de barre bus de la deuxième barre bus (2).

5. Le dispositif de commutation à isolation gazeuse selon la revendication 2, dans lequel
un réservoir du premier disjoncteur (25) est couplé au premier réservoir de connexion (27), et
un réservoir du deuxième disjoncteur (8) est couplé au deuxième réservoir de connexion (3).

6. Le dispositif de commutation à isolation gazeuse selon la revendication 2, dans lequel
un réservoir du premier disjoncteur (25) est formé de façon à faire partie intégrante du premier réservoir de connexion (27), et
un réservoir du deuxième disjoncteur (8) est formé de façon à faire partie intégrante du deuxième réservoir de connexion (3).

7. Le dispositif de commutation à isolation gazeuse selon la revendication 2, dans lequel
une longueur de réservoir du premier disjoncteur (25) est plus courte qu'une longueur de réservoir du premier réservoir de connexion (27), et
une longueur de réservoir du deuxième disjoncteur (8) est plus courte qu'une longueur de réservoir du deuxième réservoir de connexion (3).

8. Le dispositif de commutation à isolation gazeuse selon la revendication 2, dans lequel
le premier et le deuxième réservoir de connexion (27, 3) sont égaux en forme et en taille, et
les réservoirs du premier et du deuxième disjoncteur (25, 8) sont égaux en forme et en taille.

9. Le dispositif de commutation à isolation gazeuse selon la revendication 2, dans lequel
les sorties de dérivation supérieure et inférieure du premier réservoir de connexion (27) sont agencées à une même hauteur que des hauteurs de la première et de la deuxième barre bus (1, 2), respectivement, et
les sorties de dérivation supérieure et inférieure du deuxième réservoir de connexion (3) sont agencées à une même hauteur que les hauteurs de la première et de la deuxième barre bus (1, 2), respectivement.

10. Le dispositif de commutation à isolation gazeuse selon la revendication 2, comprenant une unité de communication de barres bus qui fait communiquer la première barre bus (1) avec la deuxième barre bus (2), sachant que
l'unité de communication de barres bus inclut
un troisième réservoir de connexion (42) de forme verticale qui inclut des sorties de dérivation supérieure et inférieure menées vers l'extérieur dans une même direction que les directions des sorties de dérivation du premier et du deuxième réservoir de connexion (27, 3), respectivement, et qui inclut une sortie de dérivation de hauteur intermédiaire menée vers l'extérieur jusqu'à un côté opposé aux sorties de dérivation supérieure et inférieure à une hauteur située entre des hauteurs des sorties de dérivation supérieure et inférieure, sachant que la première barre bus (1) est connectée à la sortie de dérivation supérieure et la deuxième barre bus (2) est connectée à la sortie de dérivation inférieure,
un troisième disjoncteur (47) de forme verticale qui est agencé dans une partie supérieure du troisième réservoir de connexion (42), et qui inclut une sortie de dérivation menée vers l'extérieur jusqu'à un même côté que la sortie de dérivation de hauteur intermédiaire incluse par le troisième réservoir de connexion (42), et
un quatrième réservoir de connexion (84) de forme verticale dont une surface latérale d'une extrémité supérieure est connectée à la sortie de dérivation du troisième disjoncteur (47), dont une surface latérale d'une extrémité inférieure est connectée à la sortie de dérivation de hauteur intermédiaire.

11. Le dispositif de commutation à isolation gazeuse selon la revendication 10, dans lequel
l'unité de communication de barres bus inclut
un cinquième commutateur de déconnexion (40) qui est connecté à la sortie de dérivation inférieure du troisième réservoir de connexion (42), et qui est connecté à la deuxième barre bus (2), et
un sixième commutateur de déconnexion (43) qui est connecté à la sortie de dérivation supérieure du troisième réservoir de connexion (42), et qui est connecté à la première barre bus (1).

12. Le dispositif de commutation à isolation gazeuse selon la revendication 10, dans lequel les réservoirs du premier au troisième commutateur de déconnexion (35, 20 ,5) sont égaux en forme et en taille.

13. Le dispositif de commutation à isolation gazeuse selon la revendication 2, comprenant une unité de ligne qui est connectée à la première et à la deuxième barre bus (1, 2), sachant que
l'unité de ligne inclut
un cinquième réservoir de connexion (57) de forme verticale qui inclut des sorties de dérivation supérieure et inférieure menées vers l'extérieur dans une même direction que la direction des sorties de dérivation du premier et du deuxième réservoir de connexion (27, 3), sachant que la première barre bus (1) est connectée à la sortie de dérivation supérieure et la deuxième barre bus (2) est connectée à la sortie de dérivation inférieure,
un quatrième disjoncteur (61) de forme verticale qui est agencé dans une partie supérieure du cinquième réservoir de connexion (57), et qui inclut une sortie de dérivation menée vers l'extérieur jusqu'à un même côté ou jusqu'à un côté opposé aux sorties de dérivation supérieure et inférieure incluses par le cinquième réservoir de connexion (57), et
un dispositif côté ligne qui est connecté à la sortie de dérivation du quatrième disjoncteur (61).

14. Le dispositif de commutation à isolation gazeuse selon la revendication 13, dans lequel
le premier, le deuxième, et le cinquième réservoir de connexion (27, 3, 57) sont égaux en forme et en taille, et
les réservoirs du premier, du deuxième, et du quatrième disjoncteurs (25, 8, 61) sont égaux en forme et en taille.
